# EUROPEAN PATENT SPECIFICATION

(11) **EP 2 156 692 B1**
(45) Date of publication and mention of the grant of the patent: **06.09.2017**
(21) Application number: 07765346.7
(22) Date of filing: 08.06.2007
(51) Int. Cl.: H04W 36/00

(54) **CIRCUIT SWITCHED FALLBACK MECHANISM**
LEITUNGSVERMITTELTER FALLBACK-MECHANISMUS
MÉCANISME DE REPLI À COMMUTATION DE CIRCUIT

(43) Date of publication of application: 24.02.2010
(73) Proprietor: Telefonaktiebolaget LM Ericsson (publ), 164 83 Stockholm (SE)
(72) Inventor: VIKBERG, Jari Tapio, S-153 38 Järna (SE); HALLENSTÅL, Magnus, S-187 50 Täby (SE)
(74) Representative: Ericsson
(86) International application number: PCT/EP2007/055681
(87) International publication number: WO 2008/148432

(56) References cited:
- US-A1- 2004 184 439
- ERICSSON: "Radio Resource Management Aspects of Inter-RAT Handovers" 3GPP TSG-RAN WG2 MEETING #57-BIS, [Online] 30 March 2007 (2007-03-30), pages 1-3, XP002469420 Malta Retrieved from the Internet: URL:http://64.233.183.104/search?q=cache:x F0yTnXb2QcJ:www.quintillion.co.jp/3GPP/TSG _RAN/TSG_RAN2007/TSG_RAN_WG2_RL2_3.html+R2 -071301&hl=nl&ct=clnk&cd=3&gl=nl> [retrieved on 2008-02-18]

## Description

### Technical Field

The invention relates to handling a Circuit Switched fallback mechanism for a terminal attached to a Packet Switched bearer in a radio access network.

### Background

Mobile Circuit Switched (CS) services based on Global System for Mobile Communications (GSM) and Wideband Code Division Multiple Access (WCDMA) radio access are used throughout the world-wide. They allow a user to obtain telecommunication services with a single user subscription in most countries of the world. The number of CS subscribers is growing rapidly, boosted by the roll-out of mobile CS services in countries with high populations such as India and China. One reason the number of subscribers is still growing rapidly is because of the evolution of the Mobile Switching Centre (MSC) architecture into a softswitch solution, which allows the use of a Packet Switched (PS) transport infrastructure for mobile CS services.

A 3GPP work item, "Evolved UTRA and UTRAN", defines Long-Term Evolution (LTE), designed to improve efficiency, lower costs and improve services for 3GPP-based access technology. LTE will use Orthogonal Frequency-Division Multiplexing (OFDM) radio technology in the downlink and Single Carrier Frequency Division Multiple Access (SC-FDMA) for the uplink, allowing at least 100 Mbps peak data rate for downlink data rate and 50 Mbps for uplink data rate. LTE radio can operate in different frequency bands and is therefore very flexible for deployment in different regions of the world, where different frequency bands might be licensed.

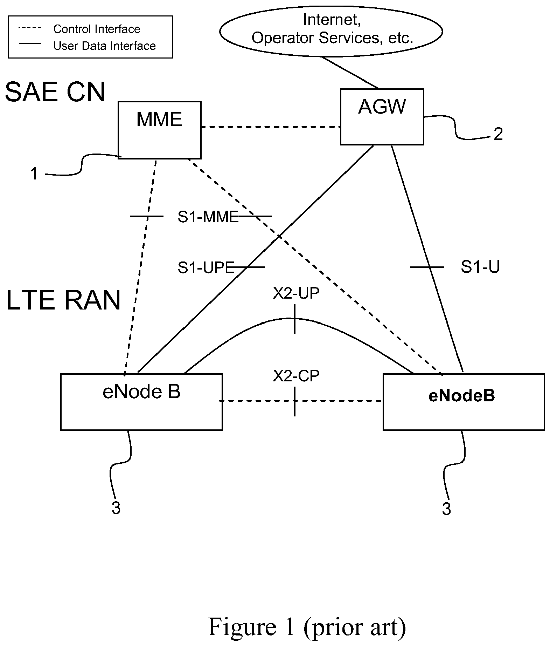

In addition to the Radio Access Network (RAN) standardization, a 3GPP System Architecture Evolution (SAE) work item is being to develop an evolved core network (CN) for LTE networks. The nodes and interfaces of the SAE network and LTE networks are illustrated schematically in Figure 1. The SAE core network is made up of core nodes, which may be further split into Control Plane (Mobility Management Entity, MME) nodes 1 and User Plane Gateway (Serving Gateway and PDN Gateway) nodes 2. In this application, the term AGW is used to depict both the Serving Gateway and the PDN Gateway nodes and functions. In the terminology currently used, AGW contains both User Plane Entity (UPE) and Inter-Access Anchor (IASA) functionality. The MME 1 is connected to an E-UTRAN NodeB (eNodeB) 3 via a S1-MME interface, and the AGW 2 (i.e. the Serving Gateway) is connected to an eNodeB 3 via an S1-U interface.

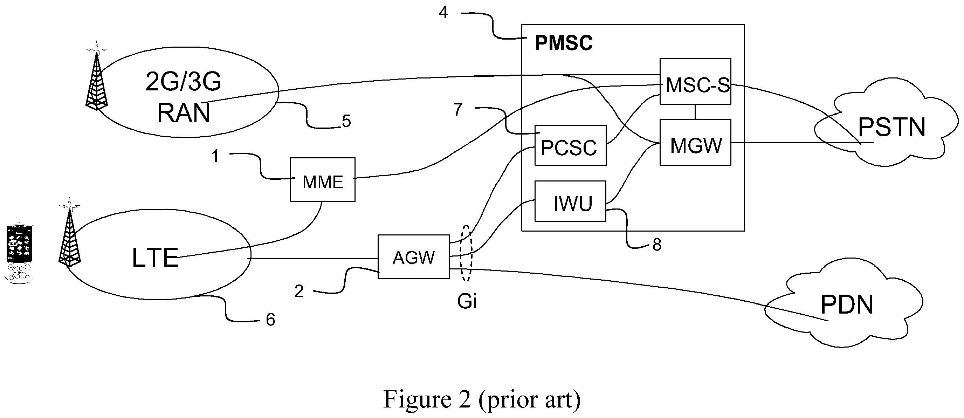

LTE and SAE only support PS data transport, and so all services must be supported via a PS domain. However, existing GSM (GPRS) and WCDMA each provide for both PS and CS access and services, and so for telephony services to be deployed over LTE radio access, an IMS-based service engine is required. Solutions to allow LTE/SAE access to CS domain services normally available via GSM and WCDMA radio accesses are referred to as "CS over LTE/SAE", or briefly just "CS over LTE" (CSoLTE), solutions. The basic architecture for these solutions is illustrated schematically in Figure 2.

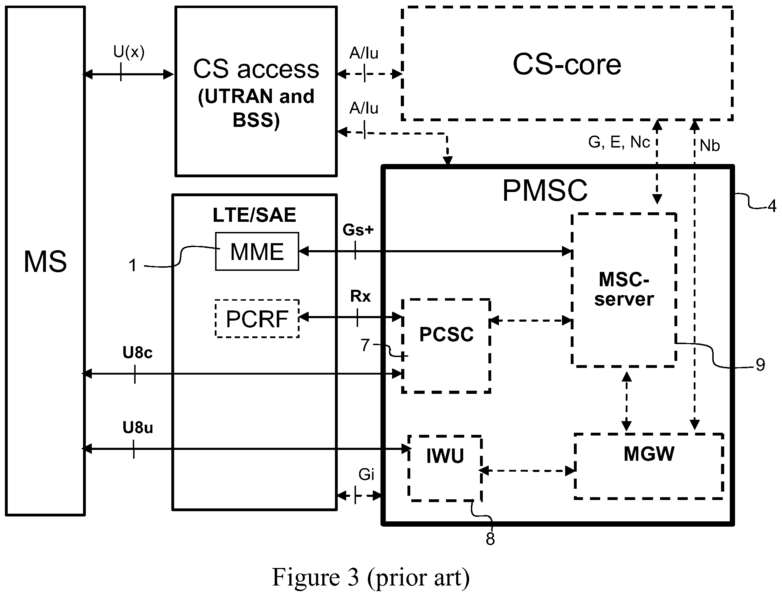

The Packet Mobile Switching Center (PMSC) 4 may serve both traditional 2G and 3G RANs 5 and the new CS over LTE based solutions 6. The PMSC 4 contains two logical functions referred to as a Packet CS Controller (PCSC) 7 and an Interworking Unit (IWU) 8, which are further illustrated in Figure 3.

The communication between a user terminal accessing a network terminal and the PMSC 4 is based on the standard Gi interface, which is also known as a SGi interface in the SAE terminology. This means that all direct communication between the terminal and the PCSC 7 and the IWU 8 in the PMSC 4 is based on IP protocols. The terminal is visible and reachable using an IP-address via an Access Gateway (AGW) 2. This communication between the terminal and the PMSC is via two different interfaces, U8c for the control plane and U8u for the user plane. The PCSC 4 has also an Rx interface to the Policy and Charging Rule Function (PCRF) for allocation of LTE/SAE bearers.

Different solutions for providing CSoLTE service have been identified. One solution is referred to as "CS Fallback". In CS Fallback, the terminal performs SAE Mobility Management (MM) procedures towards a Mobility Management Entity (MME) 1 while using LTE access. The MME 1 registers the terminal in a Mobile Switching Centre Server (MSC-S) 9 for CS based services. When a mobile terminating call or other transaction request resulting in a page for CS services is received in the MSC-S 9 it is forwarded to the terminal via the MME 1 and then the terminal performs fallback to a 2G or 3G RAN and responds to the CS Paging Request. This means that the terminal selects a cell in 2G RAN (GERAN) or in 3G RAN (UTRAN) based on information received e.g. as part of the SAE MM procedures. A similar process is used for Mobile originated CS services, and when these are triggered and the terminal is using LTE access, it will fallback to a 2G or 3G RAN and trigger the initiation of the CS service there.

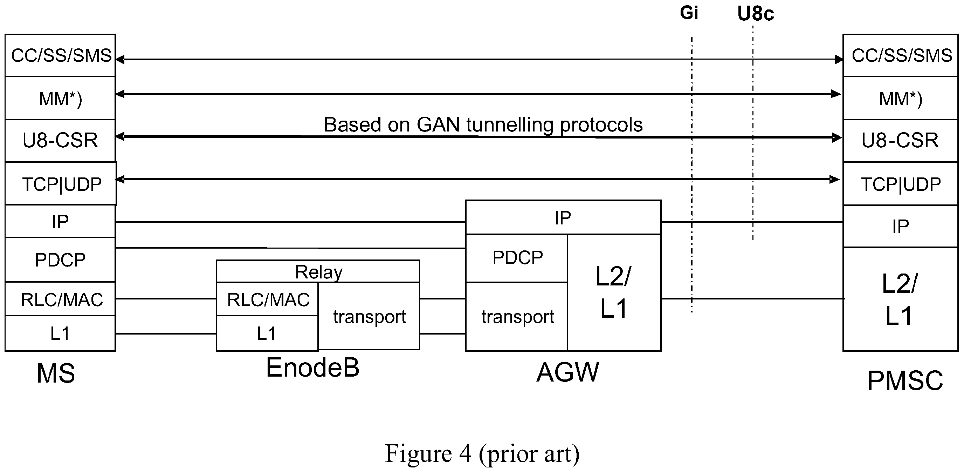

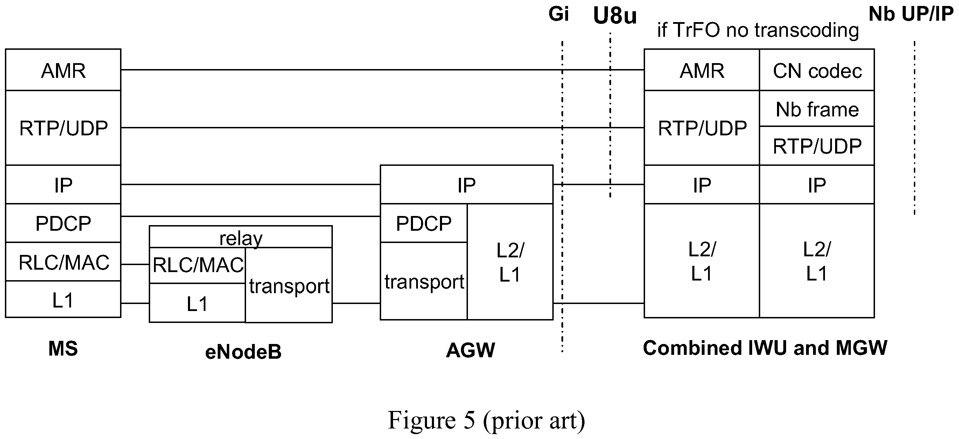

The control plane protocol architecture between the terminal and the PMSC 4 (i.e. the U8c interface) is illustrated schematically in Figure 4, in this example based on GAN tunnelling protocols, and the user plane protocols between the terminal and the PMSC 4 (i.e. the U8u interface) are illustrated in Figure 5.

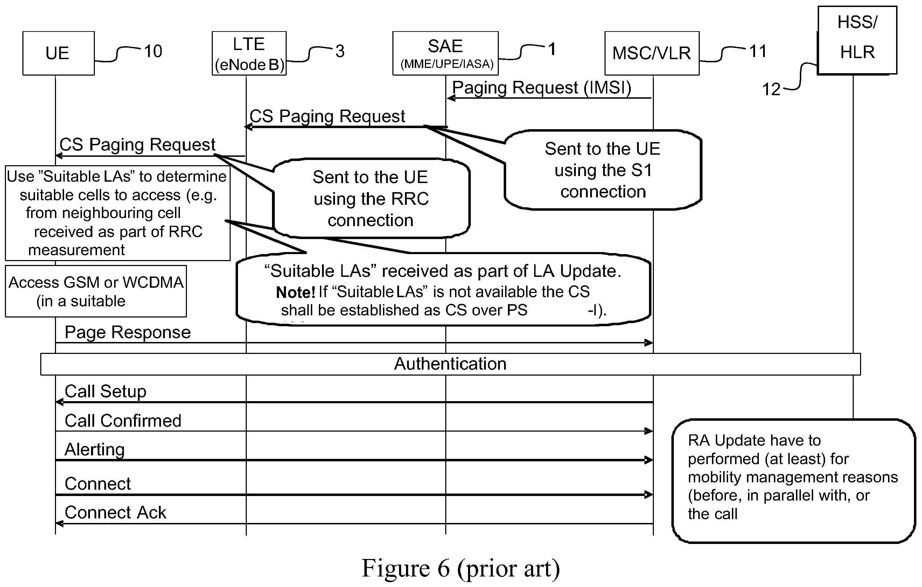

Referring to the "CS Fallback" solution described above, Figure 6 illustrates an example of the current working assumptions for the fallback mechanism. The terminal (UE) 11 performs the fallback based on information received during a Location Area/Tracking Area Update. Any ongoing PS Session with the terminal 10 can be maintained by performing Routing Area Update & Service Request in GSM/WCDMA. The Routing Area Update & Service Request can be performed either:
a) before sending a Page Response;
b) in parallel with call establishment; or
c) after call establishment.

Figure 6 also illustrates the signalling between the terminal 10 and the Mobile Switching Centre (MSC)/Visitor Location Register (VLR) 11, and the authentication process with the subscriber's Home Subscriber Server (HSS) /Home Location Register (HLR) 12.
A problem with the signalling illustrated in Figure 6 is that all ongoing LTE/SAE PS sessions are interrupted when the terminal receives the CS Paging Request and while it selects a GSM/WCDMA cell belonging to the "Suitable Location Area Identities (LAIs)" to camp on. A CS Paging Request is used to set up a signalling connection between the terminal and the network. This signalling connection can then be used for different purposes, e.g. establishment of a mobile terminated call or delivery of a mobile terminated SMS from the network to the terminal. In a GSM network, the location of the terminal is maintained on Location Area (LA) level and the current Location Area Identifier (LAI) is obtained from a Mobile Switching Centre (MSC)/Visitor Location Register (VLR), and the terminal is then paged on that Location Area. Interrupting ongoing sessions can have a detrimental effect on the user's experience even when the interruption lasts only for a few seconds.

US2004/184439 describes a method for simultaneously accessing circuit services and packet services in a cellular mobile radio system.

### Summary

The reader is referred to the appended independent claims. Some preferred features are laid out in the dependent claims.

In order to reduce the problem of interrupting ongoing LTE/SAE sessions, a Packet Switched (PS) handover (HO) is triggered towards a cell belonging to the "Suitable LAIs". After the handover is completed, the terminal sends a CS Page Response to the new target cell that was selected in the PS handover.
According to a first aspect of the invention, there is provided a method of handling a Circuit Switched (CS) fallback mechanism for a terminal attached to a Packet Switched (PS) cell in a radio access network. The terminal in this case has an ongoing PS session. A request to establish a CS session with the terminal is received at a node in the radio access network. This node may be an eNodeB in an LTE network. At the node, a target cell for handover is selected from a plurality of candidate cells to which the terminal may attach. The target cell must be able to handle the CS session. At the enodeB, instructions to perform a PS handover of the terminal to the selected cell are transmitted. This moves the ongoing PS session from the current cell to the target cell and establishes a CS session between a base station of the selected cell and the terminal. The CS session is then handled in the target cell. In this way, there is a minimal disruption to the ongoing PS session, as the disruption is only that caused by a regular PS handover, and the CS session can, if necessary, be established in the target cell.
Typically, the Packet Switched session is a Long Term Evolution Packet Switched session.
The target cell may be selected using any of measurement reports provided by the terminal, the ability of the target cell to handle simultaneous Circuit Switched and Packet Switched sessions, the cell capacity, and Quality of Service parameters.
The terminal may send a Page Response message in the selected target cell, the Page Response message being sent in response to the request to establish a CS session.
The target cell may be handled by a Mobile Switching Centre in a Global System for Mobile Communications network or Wideband Code Division Multiple Access network that sent the request to establish a Circuit Switched session with the terminal, and the the node may be an eNodeB in a Long Term Evolution network.
A Packet Switched handover command message may be sent from the node to the terminal. This message includes information to allow the terminal to perform a Packet Switched handover, information relating to the request to establish a Circuit Switched session with the terminal, and an indication that the terminal should respond to the request to establish a Circuit Switched session in the target cell after completion of the Packet Switched handover. Alternatively, a message may be sent from a node controlling the target cell to the terminal, the message ordering the terminal to perform a Packet Switched handover, and an indication that the terminal should respond to the Page Request in the target cell after completion of the Packet Switched handover.
The plurality of candidate cells to which the terminal may attach may be provided to the node in the radio access network by either one of the terminal and a Mobility Management Entity node.

According to a second aspect of the invention, there is provided a node for use in a Long Term Evolution network. The node comprises a receiver for receiving a request to establish a Circuit Switched session with a terminal, the terminal being attached to the node and having an ongoing Packet Switched session. The node is also provided with a processor for selecting a target cell from a plurality of candidate cells to which the terminal may attach, the target cell being able to handle a Circuit Switched session, and means for initiating a Packet Switched handover to the selected cell.

In order to minimize signalling, the node may transmit a command to the terminal to initiate a Packet switched handover, and information relating to the request to establish a Circuit Switched session, in a single message.

### Brief Description of the Drawings

Figure 1 illustrates schematically the nodes and interfaces of the SAE network and LTE network;
Figure 2 illustrates schematically CS over LTE architecture;
Figure 3 illustrates schematically a Packet Mobile Switching Centre.
Figure 4 illustrates schematically CS over LTE control plane protocol architecture;
Figure 5 illustrates schematically CS over LTE user plane protocol architecture;
Figure 6 is a signalling diagram illustrating a CS fallback mechanism;
Figure 7 is a signalling diagram illustrating the CS fallback mechanism according to an embodiment of the present invention.
Figure 8 is a flow diagram showing the steps of an embodiment of the invention; and
Figure 9 illustrates schematically a node for use in a LTE network according to an embodiment of the invention.

### Detailed Description

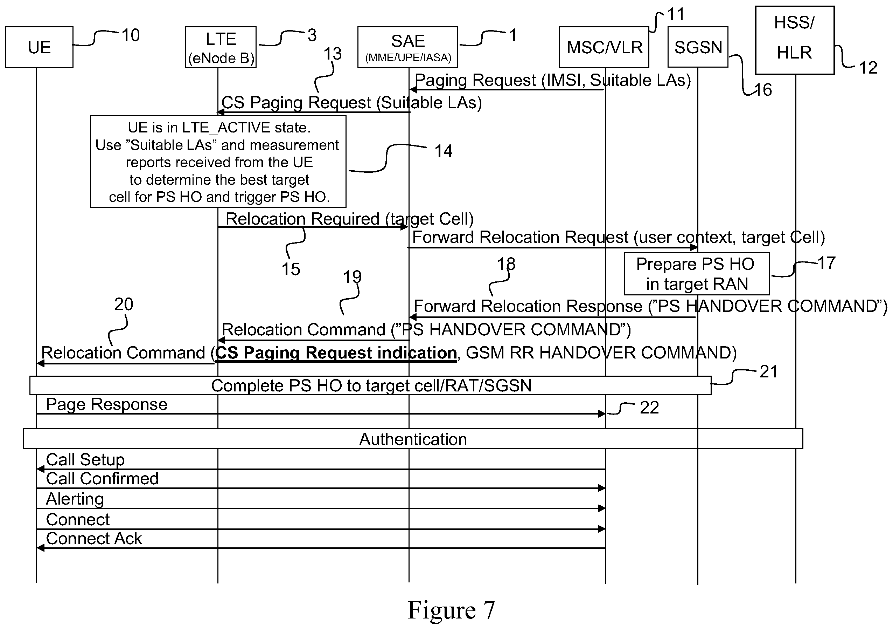

With reference to Figure 7, there is illustrated a signalling diagram. A terminal 10, alternatively referred to as User Equipment (UE), is assumed to be attached to a cell of a radio access network (RAN). The RAN is an LTE RAN that comprises an eNodeB 3. The eNodeB is further connected to the Mobility Management Entity (MME) 1 in the SAE core network. The terminal is in an LTE_ACTIVE state and has an ongoing PS session.

When an MSC/VLR 11 wishes to initiate a new CS call or other CS transaction to the terminal 10, it directs a CS Paging Request towards the terminal 10. The request is sent to an eNodeB 3 via a MME 1. When the eNodeB 3 receives 13 the CS Paging Request for the terminal 10, the eNodeB 3 analyses 14 the received "Suitable LAIs" information that the terminal provides regarding neighbouring GSM/WCDMA cells. The "Suitable LAIs" information may not be not received as part of the CS Paging Request. In this case, the "Suitable LAIs" information is kept in the terminal context in the MME and maintained as part of the terminal performing the SAE MM procedures (Tracking Area Updates) and the MME registering the terminal in the MSC-S (Location Area Updates). The "Suitable LAIs" is either received from the CS Paging Request or retrieved from the terminal context identified by the mobile/terminal identifiers included in the CS Paging Request message.

The neighbouring GSM/WCDMA cells are filtered by the eNodeB 3 with the "Suitable LAIs" information and the best candidate cell is then selected of the remaining cells. Information regarding simultaneous CS and PS support in the target cells may be used in selecting the best candidate cells, so that target cells with simultaneous CS and PS support are given higher priority. Other factors that influence the decision of the best candidate cell are capacity and Quality of Service available.

Once a candidate target cell is selected, the eNodeB triggers 15 PS handover towards that target cell. The PS handover is performed using any suitable mechanism. The mechanism illustrated in Figure 7 shows that a Relocation Required message is sent 15 to the MME 1 and forwarded to a Serving GPRS Support Node (SGSN) 16. The SGSN 16 prepares 17 the PS handover to the target cell (e.g. a 2G or 3G cell), and sends 18 a Relocation Response message to the MME 1. The MME 1 in turn sends 19 a Relocation Command message to the eNodeB 3, which forwards 20 the relocation command message to the terminal 10. The PS handover hands over the ongoing PS session to the new target cell.

The terminal 10 and the SGSN16 then complete the PS handover 21. As the main trigger for the PS handover in this case was the CS paging Request received in the MME/eNodeB from the MSC/VLR, the terminal is also informed about the CS paging Request, typically during the PS handover. This may be done using a "CS Paging Request" indication and communicated to the terminal as part of the PS Handover command 20 (or Relocation Command) from the eNodeB. The "CS Paging Request" indication may just be an indication about an incoming CS page or it may also mean that the whole or parts of the CS Paging request message is sent to the terminal providing more information to the terminal. Once the PS Handover is completed to the target cell, the terminal 10 sends 22 a CS Page response to the MSC/VLR 11 in this cell and the signalling connection is established between the terminal and the MSC/VLR using legacy principles. The MSC/VLR that paged the terminal handles the target cell as the cell was selected based on the "Suitable LAIs" information that identifies an MSC/VLR.

An alternative way to indicate the "CS Paging Request" to the terminal 10 is to send a "CS Paging Request" indication as defined above in the PS Handover request from the eNodeB i.e. in a Relocation Required message 15, so that the target Radio Access Technology (RAT) controller (e.g. a Base Station Controller, BSC or Radio Network Controller, RNC), or the target SGSN, can include this indication in any of the information elements included in a PS HANDOVER COMMAND message that is created and transparently sent to the terminal.

A further alternative way to indicate the "CS Paging Request" to the terminal 10 would be to send the "CS Paging Request" indication in the PS Handover request from the eNodeB i.e. in the Relocation Required message 15, so that the target RAT controller or the target SGSN can store this information. Once the PS Handover is completed, the CS Paging Request is sent to the terminal in the target cell, i.e. either from the target RAT controller or from the target SGSN.

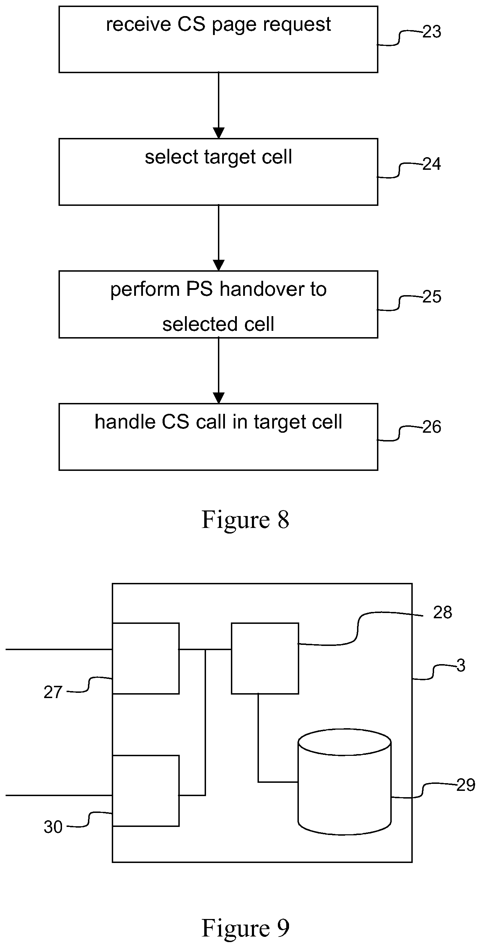

Referring to Figure 8, the basic steps of an embodiment of the invention are illustrated. The eNodeB receives 23 a CS Page Request to establish a CS session with the terminal. It selects 24 a target cell from a plurality of target cells, and then initiates a PS handover 25 to the target cell. The terminal is informed about the CS Page Request as part of the PS handover execution. Once the PS handover has been completed, the terminal sends a CS Page Response in the target cell to ensure that the CS call is handled 26 in that cell.

Referring to Figure 9, there is illustrated an eNodeB 3 for use in a Long Term Evolution network. The eNodeB 3 is provided with a receiver 27 for receiving a request to establish a CS Page request, and a processor 28 for selecting a target cell from a plurality of candidate cells. A memory 29 may also be provided, and a transmitter 30 is provided to send a PS handover message to the terminal.

The invention ensures that PS sessions are moved to a new target cell in a transparent way that is controlled by the network without any interrupt time. The network controls which GSM/WCDMA cell the fallback is made to.

It will be appreciated by the person of skill in the art that various modifications may be made to the above described aspects without departing from the scope of the present invention.

## Claims

1. A method of handling a Circuit Switched fallback mechanism for a terminal attached to a Packet Switched cell in a radio access network, and having an ongoing Long Term Evolution Packet Switched session, the method comprising:
at an eNodeB (3) in the radio access network, receiving (23) a request to establish a Circuit Switched session with the terminal (10);
at the eNodeB, selecting (24) a target cell from a plurality of candidate cells to which the terminal may attach, the target cell being selected on the basis that it is able to handle a Circuit Switched session;
at the eNodeB, transmitting instructions to perform (25) a Packet Switched handover of the terminal to the selected cell; and
establishing (26) the Circuit Switched session between the terminal and a base station in the selected cell.

2. A method of handling a Circuit Switched fallback mechanism according to claim 1, wherein the target cell is selected using any of measurement reports provided by the terminal, ability to handle simultaneous Circuit Switched and Packet Switched sessions, cell capacity and Quality of Service parameters.

3. A method of handling a Circuit Switched fallback mechanism according to claim 1 or 2, wherein the Circuit Switched session is handled in the selected target cell in response to receipt at the selected cell of a Page Response message from the terminal.

4. A method of handling a Circuit Switched fallback mechanism according to any one of claims 1 to 3, wherein the target cell is handled by a Mobile Switching Centre (11) in a Global System for Mobile Communications network or Wideband Code Division Multiple Access network that sent the request to establish a Circuit Switched session with the terminal

5. A method of handling a Circuit Switched fallback mechanism according to any one of the preceding claims, further comprising sending, from the eNodeB (3) to the terminal (10), a Packet Switch handover command message, the Packet Switch handover command message comprising information to allow the terminal to perform a Packet Switched handover, information relating to the request to establish a Circuit Switched session with the terminal, and an indication that the terminal should respond to the request to establish a Circuit Switched session in the target cell after completion of the Packet Switched handover.

6. A method of handling a Circuit Switched fallback mechanism according to any one of claims 1 to 4, further comprising sending, from a node controlling the target cell, a message ordering the terminal (10) to perform Packet Switched handover, and an indication that the terminal should respond to the Page Request in the target cell after completion of the Packet Switched handover.

7. A method of handling a Circuit Switched fallback mechanism according to any one of the preceding claims, wherein the plurality of candidate cells to which the terminal (10) may attach is provided to the eNodeB (3) in the radio access network by one of the terminal and a Mobility Management Entity node (1).

8. An eNodeB (3) for use in a Long Term Evolution network, adapted to handle a Circuit Switched fallback mechanism for a terminal attached to the eNodeB and having an ongoing Long Term Evolution Packet Switched session, the eNodeB comprising:
a receiver (27) for receiving a request to establish a Circuit Switched session with the terminal (10); a processor (28) for selecting a target cell from a plurality of candidate cells to which the terminal may attach, the target cell being selected on the basis that it is able to handle a Circuit Switched session; and
means for initiating a Packet Switched handover of the terminal to the selected cell.

9. An eNodeB (3) as claimed in claim 8, further comprising a transmitter (30) for transmitting a message to the terminal, the message comprising a Packet Switched handover command message and information relating to the request to establish a Circuit Switched session.

## Patentansprüche

1. Verfahren zum Bedienen eines leitungsvermittelten Fallback-Mechanismus für ein Endgerät, das an eine paketvermittelte Zelle in einem Funkzugangsnetzwerk angehängt ist, und mit einer fortlaufenden Long Term Evolution leitungsvermittelten Sitzung, das Verfahren umfassend:
- bei einem eNodeB (3) im Funkzugangsnetzwerk, Empfangen (23) einer Anfrage, eine leitungsvermittelte Sitzung mit dem Endgerät (10) einzurichten;
- beim eNodeB, Auswählen (24) einer Zielzelle aus mehreren Kandidatenzellen, an die das Endgerät angehängt werden kann, wobei die Zielzelle auf der Basis ausgewählt wird, dass sie fähig ist eine leitungsvermittelte Sitzung zu bedienen;
- beim eNodeB, Senden von Anweisungen, um eine paketvermittelte Übergabe des Endgeräts zur ausgewählten Zelle auszuführen (25); und
- Errichten (26) der leitungsvermittelten Sitzung. zwischen dem Endgerät und einer Basisstation in der ausgewählten Zelle.

2. Verfahren zum Bedienen eines leitungsvermittelten Fallback-Mechanismus nach Anspruch 1, wobei die Zielzelle unter Verwendung jeglicher Messungsmeldungen, die durch das Endgerät bereitgestellt sind, einer Fähigkeit, zeitgleiche leitungsvermittelter und paketvermittelte Sitzungen zu bedienen, einer Zellkapazität und von Dienstgüteparametern ausgewählt wird.

3. Verfahren zum Bedienen eines leitungsvermittelten Fallback-Mechanismus nach Anspruch 1 oder 2, wobei die leitungsvermittelte Sitzung in der ausgewählten Zielzelle in Antwort auf einen Empfang einer Seitenantwortnachricht vom Endgerät bei der ausgewählten Zelle bedient wird.

4. Verfahren zum Bedienen eines leitungsvermittelten Fallback-Mechanismus nach einem der Ansprüche 1 bis 3, wobei die Zielzelle durch eine Mobilvermittlungsstelle (11) in einem globalen System für ein Mobilkommunikationsnetzwerk oder Breitbandmultiplexzugangsnetzwerk bedient wird, das die Anfrage, eine leitungsvermittelte Sitzung mit dem Endgerät einzurichten, gesendet hat.

5. Verfahren zum Bedienen eines leitungsvermittelten Fallback-Mechanismus nach einem der vorangehenden Ansprüche, des Weiteren umfassend ein Senden, vom eNodeB (3) zum Endgerät (10), einer Paketvermittlungs-Übergabebefehlsnachricht, wobei die Paketvermittlungs-Übergabebefehlsnachricht Informationen, um dem Endgerät zu erlauben eine paketvermittelte Übergabe auszuführen, Informationen bezüglich der Anfrage, eine leitungsvermittelte Sitzung mit dem Endgerät einzurichten, und eine Angabe, dass das Endgerät auf die Anfrage, eine leitungsvermittelte Sitzung in der Zielzelle einzurichten, nach einer Beendigung der paketvermittelten Übergabe antworten sollte, umfasst.

6. Verfahren zum Bedienen eines leitungsvermittelten Fallback-Mechanismus nach einem der Ansprüche 1 bis 4, des Weiteren umfassend ein Senden, von einem Knoten, der die Zielzelle steuert, einer Nachricht, die dem Endgerät (10) befiehlt, die paketvermittelte Übergabe auszuführen, und einer Angabe, dass das Endgerät der Seitenanfrage in der Zielzelle nach der Beendigung der paketvermittelten Übergabe antworten sollte.

7. Verfahren zum Bedienen eines leitungsvermittelten Fallback-Mechanismus nach einem der vorangehenden Ansprüche, wobei die mehreren Kandidatenzellen, an die sich das Endgerät (10) anhängen könnte, dem eNodeB (3) im Funkzugangsnetzwerk durch eines von dem Endgerät und einem Mobilitätsverwaltungsinstanz-Knoten (1) bereitgestellt sind.

8. eNodeB (3) zur Verwendung in einem Long Term Evolution Netzwerk, der angepasst ist, einen leitungsvermittelten Fallback-Mechanismus für ein Endgerät zu bedienen, das an den eNodeB angehängt ist und eine fortlaufende Long Term Evolution leitungsvermittelten Sitzung hat, der eNodeB umfassend:
- einen Empfänger (27) zum Empfangen einer Anfrage, eine leitungsvermittelte Sitzung mit dem Endgerät (10) einzurichten;
- einen Prozessor (28) zum Auswählen einer Zielzelle aus mehreren Kandidatenzellen, an die sich das Endgerät anhängen kann, wobei die Zielzelle auf der Basis ausgewählt ist, dass sie fähig ist, eine leitungsvermittelte Sitzung zu bedienen; und
- Mittel zum Einleiten einer paketvermittelten Übergabe des Endgeräts an die ausgewählte Zelle.

9. eNodeB (3) nach Anspruch 8, des Weiteren umfassend einen Sender (30) zum Senden einer Nachricht an das Endgerät, wobei die Nachricht eine paketvermittelte Übergabebefehlsnachricht und Informationen bezüglich der Anfrage, eine leitungsvermittelte Sitzung einzurichten, umfasst.

## Revendications

1. Procédé de traitement d'un mécanisme de reprise automatique à circuits commutés pour un terminal fixé à une cellule à commutation de paquets dans un réseau d'accès radio et ayant une session à commutation de paquets à évolution à long terme en cours, le procédé comprenant :
à un noeud B évolué (3) dans le réseau d'accès radio, la réception (23) d'une demande d'établissement d'une session à circuits commutés avec le terminal (10) ;
au noeud B évolué, la sélection (24) d'une cellule cible parmi une pluralité de cellules candidates auxquelles le terminal peut se rattacher, la cellule cible étant sélectionnée sur la base qu'elle est à même de traiter une session à circuits commutés ;
au noeud B évolué, la transmission d'instructions pour effectuer (25) un transfert à commutation de paquets du terminal à la cellule sélectionnée ; et
l'établissement (26) de la session à circuits commutés entre le terminal et une station de base dans la cellule sélectionnée.

2. Procédé de traitement d'un mécanisme de reprise automatique à circuits commutés selon la revendication 1, dans lequel la cellule cible est sélectionnée en utilisant l'un(e) quelconque de rapports de mesure fournis par le terminal, de la capacité à traiter des sessions simultanées à circuits commutés et à commutation de paquets, de la capacité des cellules et de la qualité des paramètres de service.

3. Procédé de traitement d'un mécanisme de reprise automatique à circuits commutés selon la revendication 1 ou 2, dans lequel la session à circuits commutés est traitée dans la cellule cible sélectionnée en réponse à la réception dans la cellule sélectionnée d'un message de réponse de page issu du terminal.

4. Procédé de traitement d'un mécanisme de reprise automatique à circuits commutés selon l'une quelconque des revendications 1 à 3, dans lequel la cellule cible est traitée par un centre de commutation mobile (11) dans un réseau de système global pour communications mobiles (GSM) ou un réseau à accès multiple par répartition de code à large bande qui a envoyé la demande pour établir une session à circuits commutés avec le terminal.

5. Procédé de traitement d'un mécanisme de reprise automatique à circuits commutés selon l'une quelconque des revendications précédentes, comprenant en outre l'envoi du noeud B évolué (3) au terminal (10) d'un message de commande de transfert à commutation de paquets, le message de commande de transfert à commutation de paquets comprenant des informations pour permettre au terminal d'effectuer un transfert à commutation de paquets, des informations concernant la demande d'établissement d'une session à circuits commutés avec le terminal et une indication que le terminal doit répondre à la demande d'établissement d'une session à circuits commutés dans la cellule cible après achèvement du transfert à commutation de paquets.

6. Procédé de traitement d'un mécanisme de reprise automatique à circuits commutés selon l'une quelconque des revendications 1 à 4, comprenant en outre l'envoi depuis un noeud commandant la cellule cible d'un message commandant au terminal (10) d'effectuer un transfert à commutation de paquets et d'une indication que le terminal doit répondre à la demande de page dans la cellule cible après achèvement du transfert à commutation de paquets.

7. Procédé de traitement d'un mécanisme de reprise automatique à circuits commutés selon l'une quelconque des revendications précédentes, dans lequel la pluralité de cellules candidates à laquelle le terminal (10) peut se rattacher est fournie au noeud B évolué (3) dans le réseau d'accès radio par l'un du terminal et d'un noeud d'entité de gestion de mobilité (1).

8. Noeud B évolué (3) pour utilisation dans un réseau à évolution à long terme adapté pour traiter un mécanisme de reprise automatique à circuits commutés pour un terminal rattaché au noeud B évolué et ayant une session à commutation de paquets à évolution à long terme en cours, le noeud B évolué comprenant :
un récepteur (27) pour recevoir une demande d'établissement d'une session à circuits commutés avec le terminal (10) ;
un processeur (28) pour sélectionner une cellule cible parmi une pluralité de cellules candidates à laquelle le terminal peut se rattacher, la cellule cible étant sélectionnée sur la base qu'elle est à même de traiter une session à circuits commutés ; et
des moyens pour initier un transfert à commutation de paquets du terminal à la cellule sélectionnée.

9. Noeud B évolué (3) selon la revendication 8, comprenant en outre un transmetteur (30) pour transmettre un message au terminal, le message comprenant un message de commande de transfert à commutation de paquets et des informations se rapportant à la demande d'établissement d'une session à circuits commutés.
